**Europäisches Patentamt**

**European Patent Office**

**Office européen des brevets**

(19)

(11) **EP 1 246 094 A1**

(12) **EUROPEAN PATENT APPLICATION**

(43) Date of publication:
**02.10.2002 Bulletin 2002/40**

(51) Int Cl.⁷: **G06F 17/60**, G07C 5/00,
G06K 7/00

(21) Application number: **01107441.6**

(22) Date of filing: **27.03.2001**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(71) Applicant: **TELEFONAKTIEBOLAGET L M<br>ERICSSON (publ)<br>126 25 Stockholm (SE)** | (72) Inventors:<br>• **Busboom, Axel<br>52134 Herzogenrath (DE)**<br>• **Bohman, Karl<br>11269 Stockholm (SE)**<br><br>(74) Representative: **HOFFMANN - EITLE<br>Patent- und Rechtsanwälte<br>Arabellastrasse 4<br>81925 München (DE)** |

(54) **Container surveillance system and related method**

(57) To avoid a fixed assignment of wide-area mobile communication units to components of a container surveillance system for increase of reusability, there is provided a mobile communication device for surveillance of at least one transported unit being carried by a transporting unit, comprising a short range data communication unit (30) adapted to a short range wireless data exchange with at least one tag attached to the transported unit; a long range data communication unit (32) adapted to a long range wireless data exchange to a transport surveillance system; wherein the mobile communication unit is fixed to operating equipment of the transported unit or to the transporting unit during surveillance of the transported unit and is detachable from the transported unit or the transporting unit when the transported unit must not be surveyed.

Fig. 3

EP 1 246 094 A1

## Description

FIELD OF INVENTION

The present invention relates to a container surveillance system and a related method for online identification, tracking and monitoring of containers.

BACKGROUND OF INVENTION

Data acquisition and information management with respect to containers is critical in terms of increase of efficiency and profitability. Therefore, recently wireless container tracking systems and services have attracted more and more attention in the transport and logistics industry. Such systems and services are provided for tracking and monitoring of cargo and equipment in the supply chain on a global, regional and local level, i.e. during transport of containers via container carriers or air cargo on a global scale, via container trucks in container trains and sea feeders on a regional scale, and via road trucks and in warehouses and retail centres on a local scale.

Here, a lot of goods need to be transported and tracked. Further, perishable cargo such as food or pharmaceuticals needs to be transported at specific temperatures and/or atmosphere conditions. Expensive electronics, flowers are yet other examples for a large variety of goods that might be damaged by excessively high temperatures or unsuitable atmosphere conditions.

Therefore, in the logistics industry containers with equipment for temperature and/or atmosphere control are used to transport such sensitive cargo. A first example are reefer containers comprising so-called reefer units consisting of a cooling aggregate, temperature sensors, and an air circulation system to ensure that the entire load of the container is well kept within defined temperature and atmospheric conditions.

Yet another example are controlled atmosphere CA-containers carrying cargo such as fruit or vegetables which additionally allow to monitor and control the composition of the atmosphere within the container. By this means it is possible to influence the speed of the ripening process of fruit and vegetables during transportation.

Such reefer containers and CA-containers - generally referred to reefer containers in the following specification - are equipped with a control device having a small display and keyboard. This control device allows to programme the necessary temperature range and other parameters and further to view the programmed and actual temperature/atmospheric conditions inside the container. Further, the control device is capable of logging the temperature values at predefined time intervals. A serial interface is provided for download of logs, e.g. to a portable computer.

Further, the reefer unit comprises a small battery that enables the control device to autonomously operate independently of any external power supply. To the contrary, the actual cooling system of each reefer unit relies on external power supply. Due to the thermal insulation of the reefer container the required temperature/atmospheric range may be sustained within the reefer container without power supply for periods of several minutes up to many hours, depending on the required temperature/atmospheric ranges. However, when transporting the reefer container over long distances the reefer container is hooked onto the electrical power system, e.g., of a container carrier ship or an air cargo airplane. To the contrary, during inland transport via road or rail no such external power supply is available. For short hauls this may not be an issue since the insulation of the container may be sufficient to keep the temperature. To the contrary, for extended hauls or very temperature-critical cargo, power supply is required even during land transport. For this purpose, so-called generator sets are available which can be attached to the reefer containers. These generator sets contain fuel-powered generators having the capability of supplying the reefer unit with electrical power over an extended period of time.

In addition to the container-related components described above, container surveillance during transport also requires the provision of a container monitoring system and method for identification, tracking and monitoring of containers from a point of departure to a final destination and return. Such systems and methods are used to generate status reports for customers receiving containers, container supplier and/or shippers of goods. As described in US-A-5,712,789 a combined computing telecommunications system may be used for executing these tasks being related to container surveillance.

Another automated container identification and tracking system has been described in DE 195 34 948 A1 describing a method for surveillance of the atmosphere within a reefer container and related equipment via a centralized backup system. In particular, reference is made to container ships communicating with the centralized system via satellite communication.

A similar approach is described in US-A-5,831,519. In particular, this document proposes to use wireless mobile communication systems for status and control data exchange and satellite communication for positioning to achieve tracking services.

A problem with the existing technology as outlined above is that in particular system components on a hardware and software level being related to a long range communication for the exchange of status and control data is not used in an efficient manner. The reason for this is that either each container is provided with its own dedicated satellite-based tracking and monitoring system leading to prohibitive costs or that expensive communication facilities are fixedly installed in towing units and therefore may not be used when such towing units for handling of the containers is out of operation.

Further problems exist with respect to the application of tags. E.g., in US-A-5,565,858 there is described an electronic inventory system for stacked containers. Here, a device which locates a container from a group of containers utilizes an electronic tag. The electronic tag is capable of being positioned in close proximity to one of the containers. The electronic tag further includes at least one long range transceiver portion and at least one short range transceiver portion. Each long range transceiver portion is capable of communicating with either a short range transceiver portion associated with another electronic tag or an interrogator unit. Each short range transceiver portion is capable of communicating with a long range transceiver portion of another electronic tag. In conclusion, the device locating a container supports the positioning of a container relative to other containers when the containers are stored in a stacked or nested configuration.

Still further, in DE 197 04 210 A1 there is described a container identification and tracking system using transponders attached to each container for identification purposes. Preferably, each container also has a positioning receiver unit, a mobile communication unit and a memory unit in a housing.

Transponders are examples for passive radio frequency identification tags and used to operate without an own power supply. They use the energy from an electromagnetic field produced by a transponder reader in order to charge a capacitor that serves as power supply for a short time period. Further transponders simply modulate the reader field without the need for any power supply and the method by which transponders transmit signals to a reader is referred to as modulated backscatter.

However, in some applications active tags being powered by battery are preferable for the following reasons:

- with an active tag, higher distances between tag and reader can be achieved;

- an active tag is capable of storing and transmitting larger amounts of data than a passive transponder;

- more complex protocols may be implemented using an active tag, e.g., regarding the communication security, including access control and confidentiality, etc.;

- an active tag may initiate communication with a reader on its own without having to wait for a reader to query it;

- an active tag can interface with an external hardware such as sensors, timers, control units of cooled containers, vehicle systems, etc.

Nevertheless, the main drawback of active tags is the need for a battery supply. Replacing the battery frequency is not practical in most applications, due to the large number of tags and their geographical distribution, i.e. there is typically no single location where each tag regularly passes by. Therefore, most tag applications require a battery lifetime of several years, while the active tags still need to be very compact and therefore do not allow for large batteries.

SUMMARY OF THE INVENTION

In view of the above, an object of the present invention is to avoid a fixed assignment of wide-area mobile communication units to components of a container surveillance system for increase of reusability.

According to the present invention, there is provided a mobile communication device for surveillance of at least one transported unit being carried by a transporting unit. The mobile communication device comprises a short range data communication unit adapted to short range wireless data exchange with at least one tag attached to transported unit and a long range data communication unit adapted to a longrage wireless data exchange to a transport surveillance system. To achieve the above object it is further proposed to attach the mobile communication unit to an operating equipment of the transported unit only during the time period of surveillance of the transported unit. Thereafter, the mobile communication unit may be detached from the transported unit or the transporting unit for use with a different transported unit that may then need surveillance.

Therefore, the present invention allows to overcome a one-to-one assignment of mobile communication units to transported units and to assign a mobile communication unit only to those transported units that need surveillance in a flexible manner. Also, as the mobile communication unit may be reassigned to a different transported unit or transporting unit at the end of a certain surveillance task, it is possible to minimize idle times where the mobile communication unit will not generate revenues to the operator.

A further particular advantage is that operating equipment must be handled anyhow during preparation of a transport of the transported unit. In case the mobile communication device is attached to said operating equipment, no extra physical contact to transport equipment will be necessary while the remote access to the container is still possible during attachment of the operating equipment.

Overall, the present invention allows to achieve a significant cost benefit in that only a much smaller number of mobile communication devices than reefer containers must be owned by transporting companies.

According to a preferred embodiment of the present invention, the operating equipment is a generator set and the transported unit is a reefer container.

Here, again use is made of the fact that the number of generator sets is much smaller than the number of reefer containers owned by container shipping lines. Generator sets are only needed during inland transport, but not when the reefer containers are on board of a container ship, at a customer site, in a container depot or a port terminal. Therefore, only equipping the generator set with a costly wide-area communication device and then only attaching low-cost short range communication modules to the reefer containers leads to significant cost benefits.

Yet monitoring is possible during the most critical periods of the transport, namely the inland legs. When the container is on board of a container ship or located in a container terminal, power is typically available with reasonable reliability, however, in view of the inland legs the invention allows remote monitoring at reasonable costs during those parts of the transport where remote access is not possible today and where the power supply is least reliable.

Therefore, in case of problems such as low fuel level in the generator sets or reefer container failure, etc. it will be possible to prevent damage to the load. E.g., when a failure occurs during rail transport, maintenance of the specific reefer container will be scheduled for the next railway station. This is not possible today, since during stops there is not enough time to examine each and every reefer container. Fewer claims for customers and hence lower insurance fees will result for the container shipping line or railway or trucking operator.

Still further, at the end of the transport before detachment of the generator set, a log protocol can automatically be downloaded via the long range communication radio to a back end system. Hereby, the log protocol is readily available in case of problems without the need to manually track down and physically access the reefer container.

According to yet another preferred embodiment of the present invention, the mobile communication unit may comprise a satellite or any other suitable positioning unit.

In this case, the geographical location of expensive equipment - e.g., generator sets and reefer containers - as well as expensive load carried in the transported units will always be exactly known. This prevents loss and theft both of equipment and cargo. Still further, it enables better planning since the arrival times of equipment and load may be better predicted. Therefore, a container shipping line or railroad or truck operator line may use less spare equipment.

A further object of the present invention is to provide a real time wireless tracking system within a restricted area having defined boundaries.

Heretofore, according to the present invention there is provided a mobile communication device for surveillance of at least one transported unit at a container terminal having a short range data communication unit adapted to a short range wireless data exchange with at least one tag attached to the transported unit and a long range data exchange to a container terminal surveillance system. Further, the mobile communication unit is fixed to a switching unit or a gate for operation within boundaries of the container terminal.

Therefore, this mobile communication device supports a wireless tracking system within a container terminal that automatically updates the status of each container whenever it is moved or handled, requiring significantly less manual work and eliminating the risk of human errors. What is achieved, is a provision of real time, high quality identification, tracking, and monitoring data both to container carriers and respective customers.

Therefore, according to the present invention it is proposed to achieve a radio coverage of the container terminal through attachment of the mobile communication devices as outlined above to the switching units or gates operated within the container terminals. At the event that a container is either handled by a switching unit or that the switching unit passes a container when handling a different container, status and control information may automatically be forwarded to the control system of the container terminal.

According to yet another preferred embodiment of the present invention, the advantages achieved above may as well be provided through a hand-held communication device for surveillance of at least one transported unit comprising a short range data communication unit adapted to a short range wireless data exchange with at least one tag attached to the transported unit and a long range data communication unit adapted to a long range wireless data exchange to a transport surveillance system.

Contrary to the previous embodiments, the hand-held allows for portability and therefore also for increase of applicability. In particular, the hand-held communication device may be operated by staff working at a container terminal or as well be carried with a towing unit, e.g., a truck or train. Here, no fixing of the hand-held communication device to either a transporting or a transported unit is necessary during surveillance of the transported unit. Further, such a hand-held device may be realized through integration into existing hand-held device, e.g., mobile phones, PDAs or organizers already used in the field.

According to yet another preferred embodiment of the present invention, the short range communication units referred to above are adapted to short range wireless data exchange, for example the Bluetooth standard or some other suitable low-power short-range wireless communication method.

This allows to use available circuit components for the realization of the short range communication unit in a very cost-efficient way. Still further, low-power short-range wireless communication facilitates maintenance of the different devices using the related short range communication units.

Yet another preferred embodiment of the present invention is related to an active tag for attachment to a transported unit comprising a power supply, a memory unit for storing at least static information being related to the transported unit, a short range communication unit adapted to low-power short-range wireless communication, and a controller adapted to control the operation of the active tag using power management.

In particular, active tag power management in the sense of the present invention implies that the operation of the active tag is divided into cycles. Each cycle has a sleep time period where the active tag is switched off with the exception of a time measurement unit, e.g., a counter, and a reader signal time period for detection of existence of a reader signal at the active tag. According to the present invention it is proposed to have a sleep time period setting at the active tag which is variable according to the operative conditions.

The reason for this is that the time where the active tag "sleeps" and where the active tag "sniffs" to a reader signal impose a minimum time that an active tag and, e.g., a reader such as a mobile communication unit contacting the active tag must be in touch to ensure that the reader becomes aware of the presence of the active tag. This time equivalently referred to as passing time, however, is usually dictated by a particular situation the active tag is in. In other words, an active tag may "sleep" during longer time periods where the operative condition remains constant without changes - e.g., during long haul transport - while it should be decreased in situations where the operative conditions rapidly change - e.g., during handling at terminals. Here, the extension of the sleep time period during situation with constant operative conditions allows to significantly decrease power consumption in the active tag.

Further, according to the present invention, there is realized a tag with significantly increased operability through use of low-power communication. While already the application of a suitable low-power short-range wireless communication method allows for a decrease of used power, power consumption is further improved through switching off the active tag when no data exchange is necessary, as outlined above.

According to a preferred embodiment of the inventive tag, the active tag further comprises an interface unit adapted to exchange dynamic status and control data with a control unit of a transported unit it is attached to.

This preferred embodiment is of particular relevance when not only identification and tracking services are to be provided, but also monitoring of the transported unit - e.g., a CA-container or a reefer container - is a key issue.

According to yet another preferred embodiment of the present invention, the different units described so far - e.g., the mobile communication devices, the hand-held communication devices and the tags attached to the transported unit - are used to build up a data acquisition sub-system in a surveillance system for containers. The data acquisition sub-system is connected to a back end sub-system of the surveillance system, e.g., through a wireless local area network or mobile communication according to the GSM standard. The back end sub-system comprises a server adapted to support real time surveying services provided by the surveillance system and a database adapted to store identification information, tracking information, and monitoring information for the transported unit and/or transporting unit.

This preferred embodiment of the present invention allows to support services for different customer categories, e.g. the carrier, the port or/and the end user. Depending on customer needs, the server can be a simple relay that only collects data from the data acquisition sub-system and communicates it to existing back end tracking systems without providing specific services. On the other hand, the server could be scaled up to provide new services on the basis of the data stored in the database.

Contrary to existing surveying systems, the present invention allows for real time and thus accurate tracking and tracing information. Therefore, carriers may provide their customers with more accurate and more up-to-date information and hence improve the transparency and reliability of their services. The reason for this is that in the data acquisition sub-system transported units no longer need to have their own dedicated permanent wireless communication equipment. The detachability of this equipment allows to provide transported units with such equipment where this has not been done previously and therefore to achieve the improved real time accuracy of related identification, tracking and monitoring data.

According to yet another preferred embodiment of the present invention, the surveillance system further comprises a front end sub-system for access to the back end sub-system via standard communication, e.g., the wireless application protocol and/or the Internet.

This preferred embodiment of the present invention allows to realize a facilitated access for customers of the carriers to data they need to organize their business. One such example would be a manufacturer that tracks the status of a container carrying parts he needs for his factory to check on achievable schedules for the container delivery. Still further, the use of standardized communication allows to overcome shortcomings of proprietary systems used so far. Still further, it enables the efficient implementation of new services, e. g., the billing of carrier services via the Internet.

According to another preferred embodiment of the present invention there is provided a computer program product directly loadable into internal memory of a processor or controller and comprising software code portions for performing the steps according to the inventive method when the product is run on the processor or controller.

Therefore, the present invention is also provided to achieve an implementation of the inventive method steps on computer or processor systems. In conclusion, such implementation leads to the provision of computer program products for use with a computer system or more specifically a processor.

These programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or telephone networks and/or Internet via modems or other interface devices. It should be understood that such media, when carrying processor readable instructions implementing the inventive concept represent alternate embodiments of the present invention.

BRIEF DESCRIPTION OF DRAWINGS

In the following, the best mode of carrying out the invention as well as further advantages, objects and preferred embodiments thereof will be described with reference to the drawings in which

Fig. 1 shows a reefer or CA-container having a tag attached thereto and being coupled to a generator set carrying a mobile communication unit according to the present invention;

Fig. 2 shows a schematic diagram of a tag according to the present invention;

Fig. 3 shows a schematic diagram of a mobile communication unit according to the present invention;

Fig. 4 shows a first application scenario for the different container surveillance components according to the present invention;

Fig. 5 shows a second application scenario for the different container surveillance components according to the present invention;

Fig. 6 shows a third application scenario for the different container surveillance components according to the present invention;

Fig. 7 shows a fourth application scenario for the different container surveillance components according to the present invention;

Fig. 8 shows the scalable and open system architecture of a surveillance system according to the present invention; and

Fig. 9 shows a flow chart of a container surveillance method according to the present invention.

BEST MODE AND PREFERRED EMBODIMENTS OF THE PRESENT INVENTION

In the following, the best mode of carrying out the present invention as well as preferred embodiments thereof, further objects and further advantages will be explained with respect to the drawings. Insofar as different features of the present invention are explained with respect to certain aspects thereof, it is to be understood that these features are combinable with each other to achieve various other modifications and variations of the present invention.

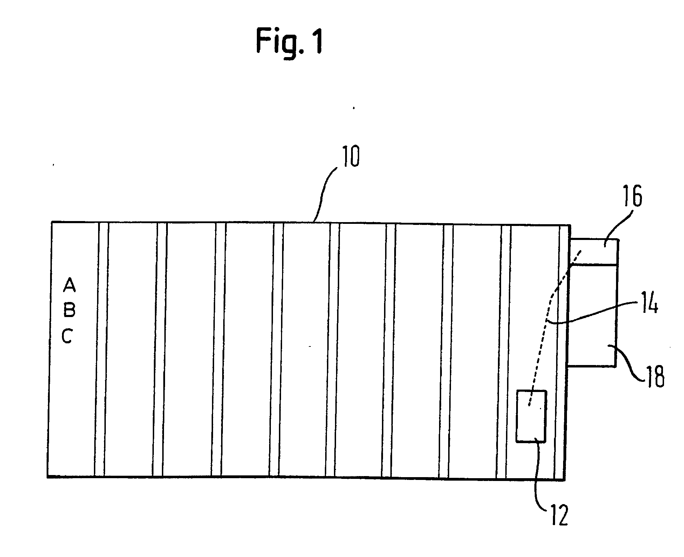

Fig. 1 illustrates a basic principle underlying the remote identification, tracking and monitoring of containers according to the present invention.

As shown in Fig. 1, a container 10 has attached thereto a tag 12 carrying at least static status information, e.g., container ID, size, tar weight, owner, etc. The tag 12 can communicate via a short range wireless communication link 14 with a mobile communication unit 16. Further, the mobile communication unit 16 is adapted for long range wireless communication to a remote container surveillance system to be described in more detail below. As shown in Fig.1, there is also attached an operating unit 18 to the container unit 10, e.g., to control the temperature or atmosphere within the container.

Typical examples for the container shown in Fig. 1 are reefer containers, i.e. freight container for transporting frozen or chilled freight. Further, containers may be provided as CA-container, i.e. reefer container that in addition allow to control and monitor the composition of the atmosphere within the container 10. These CA-containers are mainly used for transporting fruit or vegetables where the ripening process may be influenced by the atmosphere composition. An example for the operating equipment 18 shown in Fig. 1 are, e.g., a fuel power generator system with a reefer unit and a generator set adapted to supply the reefer unit with power while no external electrical power is available during transport of the container.

As shown in Fig. 1, a first aspect of the present invention is that it relies on the separation of the data communication link into a short range link between the tag 12 and the mobile communication unit 16 and a further long range communication link between the mobile communication unit 16 and a remote container surveillance system. Further, a second aspect is that the mobile communication unit 16 is not permanently attached to the container 10, but may be detached therefrom during time periods where no remote identification, tracking or monitoring of the container 10 is necessary.

Heretofore, the mobile communication unit 16 may be handled separately from the operating equipment 18 or attached and detached from the container 10 together with the operating equipment 18.

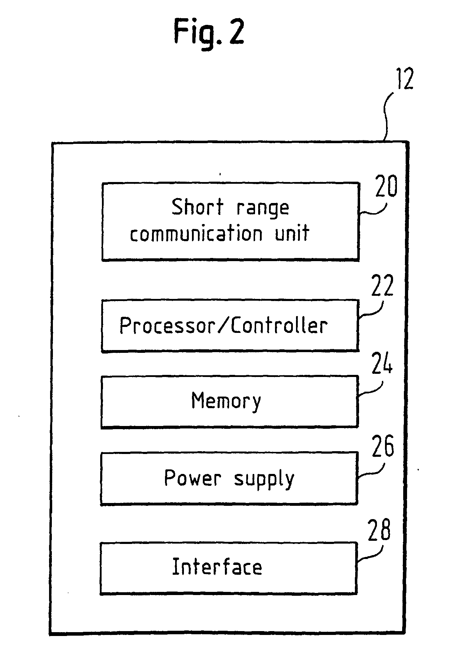

Fig. 2 shows a schematic diagram of the tag 12 shown in Fig. 1.

As shown in Fig. 2, the tag 12 comprises a short range communication unit 20, a processor/controller 22, a memory 24, a power supply 26, and a controller interface 28.

Operatively, the short range communication unit 20 is provided for data exchange with a mobile communication unit 16 shown in Fig. 1. In particular, status and control data may be exchanged via the wireless short range, low-power link. This link could be based on Bluetooth or any other short range, low-power radio systems that operate in allocated ISM (Industry, Science, Medical) bands. Depending on the needs of a specific solution related radio ranges will be provided, e.g., a radio range of up to 30 m.

Further, the interface 28 of the tag 12 allows to achieve interfacing between the tag 12 and equipment units attached to the container 10, e.g., the reefer unit. Via this interface an exchange of dynamic status information is enabled. One typical such case is the tracking of reefer containers where the tag 12 needs to interface with the reefer unit 18 to, e.g., read out or write set points, read out current sensor values, e.g., for temperature. In practice there may be used a number of temperature sensors in a reefer container so that all related values may be read out for subsequent logging. Therefore, the interface 28 enables the tag 12 to transmit data via the short range low-power radio link 14 to the mobile communication unit 16. Yet another option covered by the present invention is that the mobile communication unit 16 directly interfaces with operating equipment 18, e.g., to read the fuel level of a tank or the status of a generator.

As also shown in Fig. 2, the data exchanged via the short range communication unit 20 and the interface 28 may be stored in a memory 24 under control of the processor 22. Operatively, the processor/controller 22 may also carry out a power management for the power supply 26 to avoid any unnecessary power consumption. In particular, one option is that one or more time windows (s) are specified via the short range communication unit 20 for activation of the components in the tag 12 to achieve data exchange. Outside these time windows the tag 12 may then be set into a sleep mode to avoid a power loss. Such a sleep mode may account for a significant part of the tag operation time which may therefore be operated over several years without any maintenance.

In particular, according to the present invention, active tags are considered as using a "sleep" mode of the active tag to achieve economic usage of battery power. In the sleep mode the entire circuitry of the active tag is completely switched off, except for a time measurement unit - e.g., a counter in the processor 22 that measures a sleep time period $t_{sleep}$. When the sleep time period has expired, the time measurement unit powers the remaining circuitry of the active tag which is then capable of receiving radio signals to determine whether a mobile communication unit such as reader is attempting to communicate with it.

When the active tag receives a reader signal, it will remain powered on and start communicating with the related reader as long as required. If the active tag does not receive a reader signal, it will only stay active as long as necessary to ensure that no reader signal is present during a time period referred to as radio signal time period or equivalently "sniff period" $t_{sniff}$ in the following.

The active tag will then be powered down again, except for the time measurement unit that will wake the active tag up again after another sleep time period has expired.

According to the present invention, it is assumed that the reader signal time period is much lower - e.g., by several orders of magnitude - than the sleep time period so that the lifetime of the active tag is prolonged accordingly - e.g., by several orders of magnitude - in comparison to an "always on" scenario.

Of importance for the inventive tag according to the present invention is also that the sum of the sleep time period and the reader signal time period $t_{sniff}$ also referred to as cycle time in the following imposes a lower limit to the time that an active tag and a mobile communication unit must in reach to each other to ensure that the mobile communication unit becomes aware of the presence of the active tag. The related time period will be referred to as the passing time $t_{pass}$ in the following.

However, the passing time $t_{pass}$ is usually dictated by the particular situation. E.g., the passing time may be very long in certain situations - e.g., many hours when an active tag on a freight container is communicating with a reader on a truck head or chassis carrying the freight container - or very short in other situations - e.g., fractions of a second when an active tag on a freight container is passing by a stationary reader at high speed. It is typical for all the applications according to the present invention that each active tag will - during its lifetime - sometimes be in situations with a higher passing time and sometimes be in situations with a shorter passing time.

According to the present invention, the sleep time period is therefore selected such that it is compatible with the shortest conceivable passing time, $t_{pass,min}$. In other words, the relation

$$t_{sleep} \leq t_{pass,min} - t_{sniff}$$

should be fulfilled according to each operative conditions of the active tag. This is achieved by assigning sleep time periods to the active tag in a dynamic matter depending on the particular situation of the active tag, e.g., within its life cycle or within the supply chain.

Whenever a mobile communication unit communicates with an active tag, it reprogrammes the sleep time period of the active tag considering the location and function of the particular mobile communication unit, data read from the active tag or other information that is available in the mobile communication unit.

A related example could be that a container equipped with an active tag is located on a truck by a toplifter or straddle carrier or suitable vehicle. This suitable vehicle is equipped with an active tag reader, whereas the truck and trailer are not equipped with active tag readers. It is expected that the truck will drive past a stationary active tag reader at an exit of a port or a container depot at a relatively high speed. Therefore, the reader on the toplifter or similar vehicle needs to programme the active tag with a short sleep time period, e. g., in the order 0.5 seconds.

However, when the truck enters a port or container depot, then the next expected move is that of a straddle carrier or other vehicle picking up the container from the truck. The active tag on the container will remain in contact with the reader of the active tag of the straddle carrier during an extended period of time - e.g., several minutes - while the straddle carrier is moving the container. Therefore, the reader at the entry gate of the port or container depot may set the sleep period of the active tag to a higher value - e.g., 20 seconds.

Further ramifications of the ideas outlined above could be that, depending on the situation, a reader may programme sequences of sleep periods into an active tag. For example, when a container is loaded onboard a ship, it may be sufficient for the active tag to wake up once an hour only while the vessel is on sea. However, once the vessel is expected to approach the destination port, a shorter sleep period might be required to ensure that the reader on the crane unloading the container will be able to establish contact to the active tag. In this example, the reader on the crane loading the container onboard the vessel could programme the active tag like this: first, wake up once an hour for three days, then wake up every ten seconds.

Another scenario would be that a reader is moving together with a tag and could modify the sleep time period in dependence on the geographical location. E.g., it may be assumed that an active tag on a container and a reader of the truck towing the container may constantly communicate with each other, while the container is being towed. As long as the container is far enough away from its destination, the reader could programme the active tag to be asleep for extended intervals, e.g., one hour. When the reader is equipped with a GPS receiver or other positioning equipment, it may determine when the container is approaching its destination. Once this happens, the reader could programme the active tag to wake up more frequently, e.g., every second.

While above the power management method has been explained with respect to active tags, in the trucking of freight containers or other cargo in transportation by sea, road, rail or air, it should be understood for those skilled in the art that it may as well be applied to the trucking of animals, to the identification of vehicles for road tar collection, theft protection, etc., as well as stock management and supply chain management.

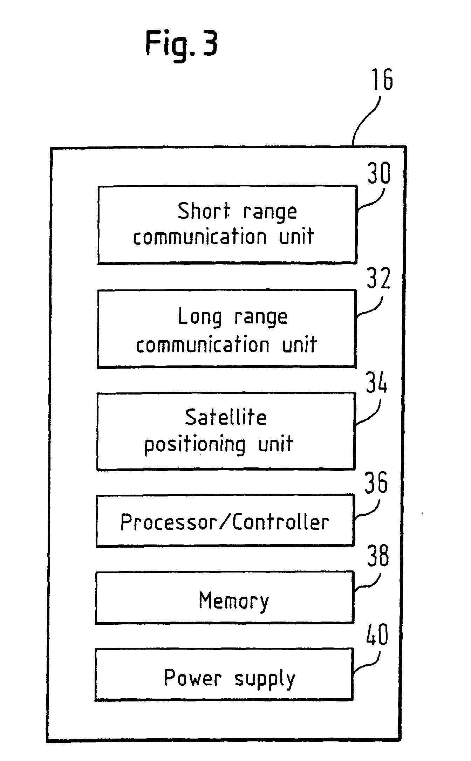

In the following, the mobile communication unit 16 shown in Fig. 1 will be explained in more detail with reference to Fig. 3.

As shown in Fig. 3, the mobile communication unit 16 comprises a further short range communication unit 30, a long range communication unit 32, optionally a satellite positioning unit 34, a processor/controller 36, a memory 38, and a power supply 40.

Operatively, the short range communication unit 30 shown in Fig. 3 achieves the wireless short range, low-power communication link to the tag 12 explained above with reference to Fig. 2. In addition, the wireless communication unit 16 is provided with a long range communication unit 32 achieving a link to a remote container surveillance system, e.g., according to the GSM, PDC, or DAMPS wireless communication standard, or using a wireless local area network WLAN, further Mobitex, GPRS, UMTS, etc. As is clearly noted by those skilled in the art any such standard is to be considered as non-binding for the present invention and further available wireless communication standards may as well be applied to the long range wireless communication in the sense of the present invention. Examples would be satellite data communication standards like Iridium, Project 21, Odyssey, Globalstar, ECCO, Ellipso, Tritium, Teledesic, Spaceway, Orbcom, Obsidian or Aries in cases where terrestrial mobile communication systems are not available.

As also shown in Fig. 3, the mobile communication unit 16 comprises a positioning unit 34 for positioning of a container to which the mobile communication unit 16 is attached. Here, it is to be noted that the provision of the positioning unit 34 is optional and may be omitted in case tracking and positioning is not required. One approach to positioning could be the use of satellite positioning systems, e.g., GPS or GLONASS. Another approach could be the positioning of a wireless communication unit 16 utilizing the mobile communication network. Here, some of the positioning techniques are purely mobile communication network based - e.g., EOTD - and others rely on a combination of satellite and mobile communication network based positioning techniques - e.g., Assisted GPS.

Operatively, the processor/controller 36 and memory 38 in the mobile communication unit 16 allow for a control of data exchange between the mobile communication unit 16 and the tag 12 shown in Fig. 1 and a remote surveillance system to be explained in the following, and also for a storage of such data. Necessary power for the operation of the components of the mobile communication unit 16 is provided through a power supply 40.

While the mobile communication unit 16 has been shown as dedicated stand alone unit, a similar functionality may be achieved by integrating the short range communication unit 30 and optionally the satellite positioning unit 34 into a hand-held device, e.g., a portable device used by staff in a container terminal or by truck drivers, train men, or in the field of airplane cargo by operating staff, air cargo handling staff or switching unit operators, etc. Yet another example would be dedicated handheld computers for industrial and logistics applications, e.g., a Psion Teklogix. In each case the advantage is that already existing long range wireless communication equipment may also be used for the purpose of container identification, tracking and monitoring.

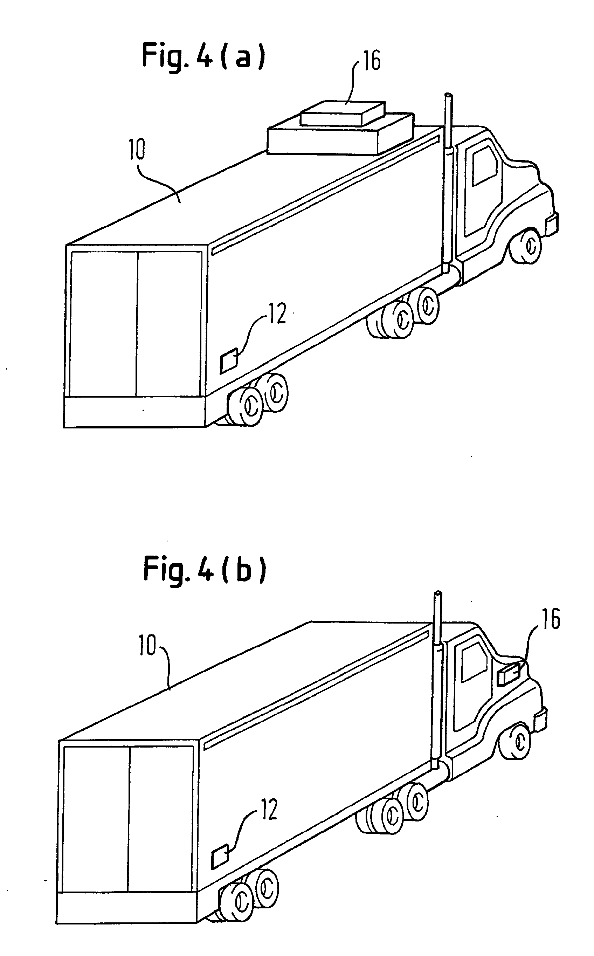

In the following different application scenarios for the application of the inventive tag 12 and mobile communication unit 16 will be explained with respect to Fig. 4 to Fig. 8. Insofar as the attachment and detachment of the mobile communication unit 16 to different transporting or transported units is referred to, any resolvable attachment is well covered by the present invention, e.g., magnetic fixing, mechanic fixing by screws, rails, hooks, balls, snap-on mountings, further any kind of electrically achievable attachment, e.g., electro magnets, or further reversible chemical fixtures such as adhesive tape, scotch tape, glue, pasted tape, etc.

Fig. 4(a) and 4(b) show a first application scenario of the tag and mobile communication unit according to the present invention.

As shown in Fig. 4(a) one option being related to road transportation is to reversibly fix a mobile communication unit to the operation equipment - e.g., a genset - of a container during road transport thereof. In such a case, the mobile communication unit may easily communicate with the tag 12 of the container 10 when being towed by the truck which therefore does not need any modification whatsoever. The same applies, if the mobile communication unit 16 is attached to the towing truck - e.g., trailer or chassis - during road transportation of the container 10, as shown in Fig. 4(b). Another option is to provide the mobile communication unit as handheld device described above and then to carry the handheld device within the cabin of the truck during surveillance of the container 10.

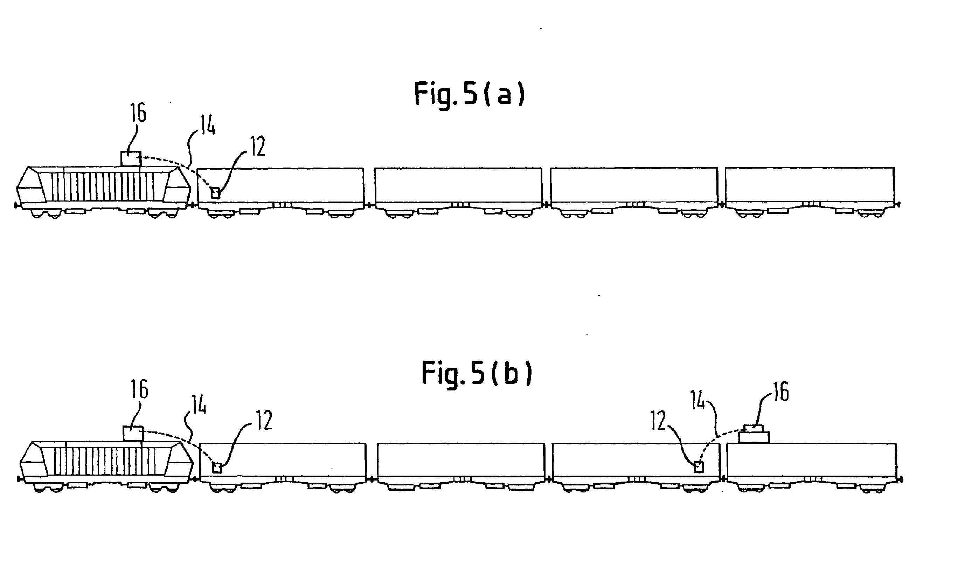

Fig. 5(a) and 5(b) show a second application scenario for the inventive tag and mobile communication being related to rail transportation.

In particular, Fig. 5(a) shows a first example where the mobile communication unit is attachably fixed at the locomotive or railcar for short range wireless communication to those containers be lying in the reach of the short range communication unit in the wireless mobile communication unit 16. As shown in Fig. 5(b), the wireless communication unit 16 may as well be attached to operating equipment of a container 10 being towed by the locomotive. This wireless communication unit 16 may then achieve a short range communication not only with the tag 12 of the container carrying the operating equipment, but also to tags of containers proceeding or succeeding to the container carrying the operating equipment whereto the mobile wireless communication unit 16 is attached to.

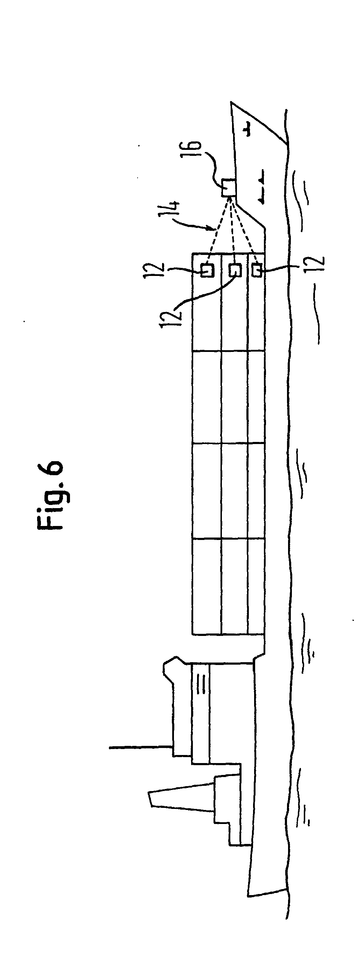

The same principles apply to a third application scenario for the inventive container surveillance components, as shown in Fig. 6. Here, for each container to be identified, tracked or monitored during sea transport, there must be provided a wireless communication unit 16 in reach of the short range communication unit of the tag 12 attached to the container. A first option would be to modify the loading scheme according to the attachment schemes for the wireless communication units. Alternatively, the distribution of the detachable wireless communication units 16 over the container ship could be determined in accordance with a loading scheme being determined according to other constraints and parameters. Again, the flexible attachment/detachment of wireless communication units 16 for the surveillance of containers allows to avoid any fixed assets which would not generate revenues for the operator. In other words, once no more surveillance of containers is necessary, the mobile communication device may easily be detached from the container ship and either be used on a different container ship or any other transporting device.

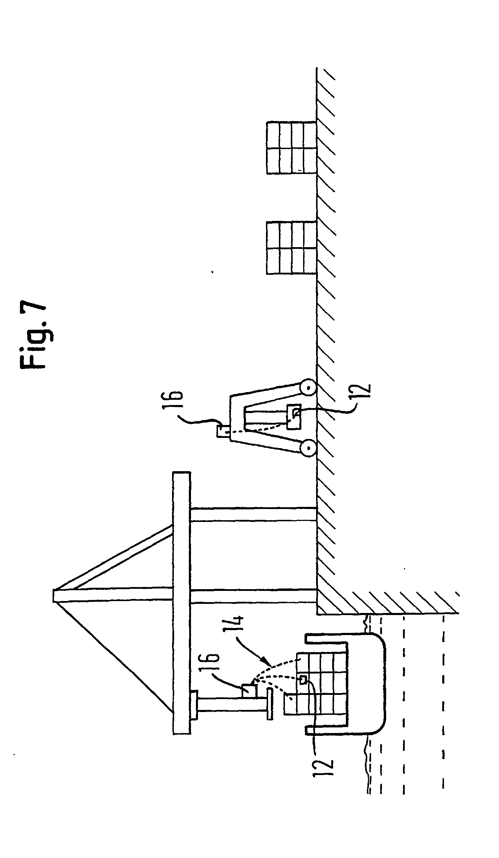

While above the application of the inventive surveillance components has been described with respect to long range global, regional or local transportation, in the following the application of the inventive concept within a restricted area will be explained with respect to Fig. 7.

In particular, the splitting of the short range and long range wireless communication within a restricted area will be applied to all vehicles and devices handling the container within the restricted area such as a container terminal, a container port, or a manufacturing side in any way. This includes in-gates and out-gates of such terminals and any kind of handling vehicles such as top-loaders, side-loaders, reach stackers, transtainers, hustlers, cranes, straddle carriers, etc.

Here, according to the present invention the approach is generally not to search for a specific container using only a single mobile communication unit 16, but to provide a plurality of mobile communication units 16 spread over the terminal and to receive status and control information each time a container is hooked onto such a handling device like a crane or a stacker. In other words, the approach is event-driven in the sense that when a container bypasses a mobile communication unit, this event is used to update related status and control information.

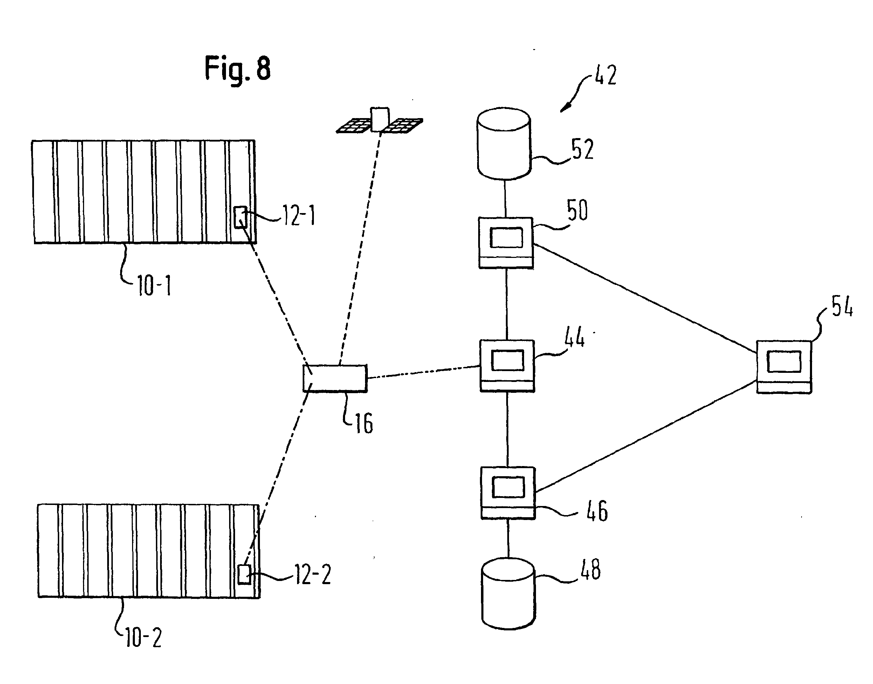

Fig. 8 shows the scalable open system architecture of a container surveillance system according to the present invention.

As shown in Fig. 8, the inventive components for container surveillance, i.e. the tags 12-1, 12-2, ... attached to the container 10-1, 10-2, ... and further the at least one mobile communication unit 16 may be integrated into a status data and control data acquisition system relying on wireless communication with split short range and long range links between the tags and the wireless communication unit and the wireless communication unit and the subsequent surveillance system.

As also shown in Fig. 8, when the positioning unit 34 is provided in the wireless communication unit for tracking purposes, the mobile wireless communication unit 16 will receive, e.g., global positioning service GPS signals or apply differential GPS. However, it should be noted that the present invention is not restricted to GPS, but that as well, e.g., GLASSNOS signals or any other suitable positioning methods may be used according to the present invention, e.g. mobile communication network based or combined mobile communication network and satellite based positioning methods.

As also shown in Fig. 8, the mobile wireless communication unit 16 communicates with a back end sub-system 42. This back end sub-system 42 may comprise a local communication system 44 communicating with the wireless communication unit 16 via GSM, WLAN, Mobitex, etc. A further component could be a computing system 46 and a database 48 constituting existing proprietary tracking system already installed in the field.

Further, according to the present invention it is proposed to extend the back end sub-system using a server 50 and a related database 52. The server 50 is adapted to support real time surveillance services provided by the inventive surveillance system. Further, the database 52 is adapted to store identification information, tracking information, and monitoring information for transported containers 10-1, 10-2 and/or the transporting unit.

Therefore, according to the present invention it is proposed to extend proprietary systems by the server 50 and the database 52 to achieve an optimal platform for provision of logistic services to external customers overcoming proprietary data formats and communication procedures.

For the reason of improved service capability and data exchange, Fig. 8 also shows that the inventive surveillance system comprises a front end sub-system 54 for access to the back end sub-system. Preferably, this access is achieved in a wireless manner - e.g., using the wireless application protocol WAP - and/or via the Internet.

According to the present invention it is possible that one server 50 is operated at each terminal, but depending on customer requirements this can easily be scaled down or scaled up. The server 50 enables the support of services for different customer categories such as carrier, the port and/or the end customer.

This is in compliance with the trend of increasing complexity of integrated logistic networks and inter-modal transportation using ships, airplanes, trucks, trains, etc. Also, in view of the increasing demand for customer service as well as cost efficiency the inventive surveillance system significantly improves information and documentation quality in customer services using a decentralized scalable open system architecture starting at the central surveillance office towards the actual shipment.

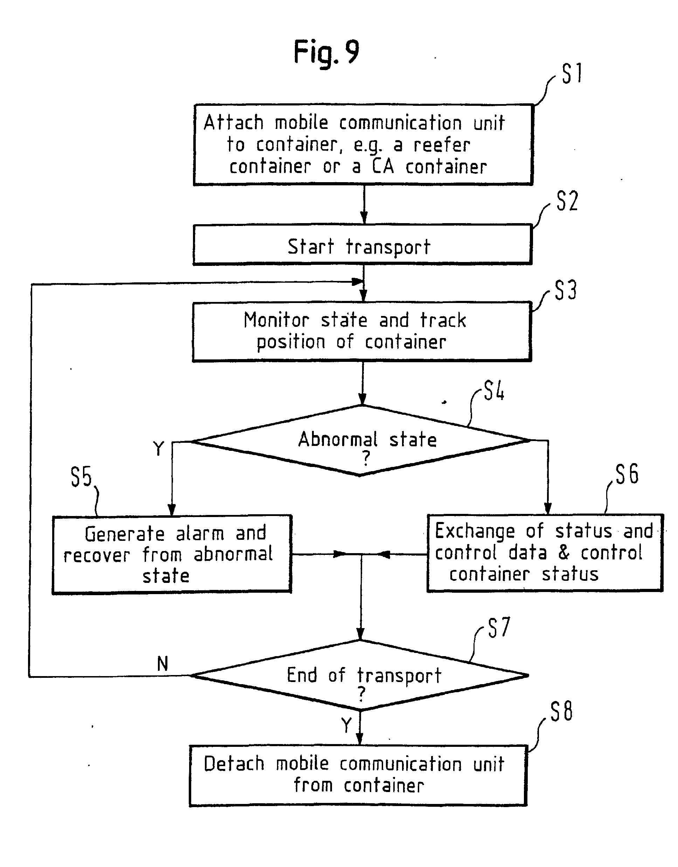

To further illustrate the operation of the inventive container surveillance system, Fig. 9 shows a flow chart according to the inventive method of surveying a transport of at least one container.

As shown in Fig. 9, initially a mobile communication unit is attached to the container before start of the transport in step S2. Hereafter, there is executed a continuous monitoring of the state and a continuous tracking of the positioning of the container according to step S3. At regular intervals it is checked whether an abnormal state has occurred in a step S4. In the affirmative case there is generated an alarm which is forwarded to the surveillance system so that a recover mechanism can be initiated and carried out to recover from the abnormal state in a step S5. Otherwise, status and control data is exchanged with the surveillance system and eventually a remote control of the container is carried out in a step S6. Then, in a step S7 it is interrogated whether the transport has already reached its final destination. In the affirmative case, the mobile communication unit is detached from the container in a step S8 for reuse within the surveillance system. Otherwise the method branches back to step S3 to continue the monitoring of state and position of the container.

While in the above, the present invention has been described with reference to the drawings and figures of preferred embodiments of the invention, it should be noted that clearly the present invention may also be implemented using variations and modifications thereof which will be apparent and can be readily made by those skilled in the art without departing from the scope and spirit of the present invention.

E.g., functionalities described above may be realized in software, in hardware, or a combination thereof.

Accordingly, it is not intended that the scope of claims appended hereto is limited to the description as set forth herein, but rather that the claims should be construed so as to encompass all features of presentable novelty that preside in the present invention, including all features that would be treated as equivalent thereof by those skilled in the art to which the present invention pertains.

## Claims

1. Mobile communication device for surveillance of at least one transported unit being carried by a transporting unit, comprising:

a short range data communication unit adapted to a short range wireless data exchange with at least one tag attached to the transported unit;

a long range data communication unit adapted to a long range wireless data exchange to a transport surveillance system; wherein

the mobile communication unit is fixed to operating equipment of the transported unit or to the transporting unit during surveillance of the transported unit and is detachable from the transported unit or the transporting unit when the transported unit must not be surveyed.

2. Mobile communication device according to claim 1, *characterized in that* the operating equipment of the transported unit is attached to the transported unit during transport.

3. Mobile communication device according to claim 2, *characterized in that* it the operating unit is a generator set and that the transported unit is a reefer container.

4. Mobile communication device for surveillance of at least one transported unit at a container terminal, comprising:

a short range data communication unit adapted to a short range wireless data exchange with at least one tag attached to the transported unit;

a long range data communication unit adapted to a long range data exchange to a container terminal surveillance system; wherein

the mobile communication unit is fixed to a switching unit or a gate for operation within boundaries of the container terminal.

5. Mobile communication unit according to claim 4, *characterized in that* the switching means is selected from a group comprising top-loaders, side-loaders, reach stackers, transtainers, hustlers, cranes, switch trucks, trailer jockeys, straddle carriers and shunters.

6. Mobile communication unit according to one of the claim 1 to 5, *characterized in that* it further comprises a satellite positioning unit.

7. Mobile communication device according to one of the claims 1 to 6, *characterized in that* the short range communication unit is adapted to short range wireless data exchange of the Bluetooth type.

8. Mobile communication device according to one of the claims 1 to 6, *characterized in that* the short range communication unit is adapted to short range wireless data exchange in an ISM band.

9. Mobile communication device according to one of the claims 1 to 8, *characterized in that* the short range communication unit is adapted for short range wireless data exchange over a distance up to 30m.

10. Hand-held communication device for surveillance of at least one transported unit comprising:

a short range data communication unit adapted to a short range wireless data exchange with at least one tag attached to the transported unit;

a long range data communication unit adapted to a long range wireless data exchange to a transport surveillance system.

11. Hand-held communication device according to claim 10, *characterized in that* it is a mobile phone, PDA or organizer, or a dedicated handheld computer.

12. Hand-held communication device according to claim 10 or 11, *characterized in that* the short range communication unit is adapted to short range wireless data exchange of the Bluetooth type.

13. Hand-held communication device according to claim 10 or 11, *characterized in that* the short range communication unit is adapted to short range wireless data exchange in an ISM band.

14. Hand-held communication device according to one of the claims 10 to 13, *characterized in that* the short range communication unit is adapted for short range wireless data exchange over a distance up to 30m.

15. Active tag for attachment to a transported unit, comprising:

a power supply;

a memory unit for storing at least static information being related to the transported unit;

a short range communication unit adapted for low power wireless communication;

a controller adapted to control the operation of the active tag using power management, such that

the operation of the active tag is divided into cycles and each cycle has

a sleep time period where the active tag is switched off with the exception of a time measurement unit,

a reader signal time period for detection of existence of a reader signal at the active tag; wherein

a sleep time period setting is variable according to operative conditions.

**16.** Active tag according to claim 15, *characterized in that* operative conditions comprise location of the active tag or kind of vehicle handling the transported unit the active tag is attached to.

**17.** Active tag according to claim 15 or 16, *characterized in that* the sleep time period setting is variable according to the sequences of sleep time periods.

**18.** Active tag according to claim 15, *characterized in that* it further comprises an interface unit adapted to exchange dynamic status and control data with a control unit of the transported unit it is attached to.

**19.** Active tag according to claim 15 or 18, *characterized in that* the short range communication unit is adapted for wireless communication over a distance up to 30m.

**20.** Surveillance system for at least one transported unit being carried by a transporting unit, comprising:

a back end sub-system with

a server adapted to support real time surveillance services provided by the surveillance system;

a data base adapted to store identification information, tracking information, and monitoring information for the transported unit and/ or transporting unit; and

a data acquisition sub-system with

a tag attached to the transported unit having a short range communication unit adapted to a short range wireless communication of status data with respect to the transported unit;

a mobile communication unit having a short range data communication unit adapted to a short range wireless data exchange with the tag and a long range data communication unit adapted to a long range wireless data exchange with the back end sub-system; wherein

the mobile communication unit is fixed to the transported unit or its transporting unit during surveillance of the transported unit and is detachable from the transported unit or the transporting unit when the transported unit must not be surveyed.

**21.** Surveillance system according to claim 20, *characterized in that* the tag further comprises an interface unit adapted to exchange dynamic status and control data with a control unit of the transported unit.

**22.** Surveillance system according to claim 20 or 21, *characterized in that* it further comprises a front-end sub-system for access to the back end sub-system via wireless application protocol (WAP) and/or the internet.

**23.** Method of surveying a transport of at least one transported unit between a transport start location and a transport target location, comprising the steps:

attaching a mobile communication unit to the transported unit or a transporting unit moving the transported unit before start of surveillance;

carrying out a short range wireless data communication between the mobile communication unit and a tag attached to the transported unit and a long range wireless data communication between the mobile communication unit and a transport surveillance system for exchange of status and/or control information during the surveillance;

detaching the mobile communication unit from the transported unit at the end of surveillance.

**24.** Method according to claim 23, *characterized in that* the mobile communication unit is attached to a generator set of a reefer container.

**25.** Method according to claim 23 or 24, *characterized in that* it further comprises the step of satellite based positioning during surveillance for tracking of the transported unit.

**26.** Method according to one of the claims 23 to 25, *characterized in that* it further comprises the step of generating an alarm when an abnormal status occurs during surveillance of the transported unit.

**27.** Active tag power management method comprising the steps:

dividing the operation of the active tag into cycles such that each cycle has

a sleep time period where the active tag is switched off with the exception of a time measurement unit,

a reader signal time period for detection of existence of a reader signal at the active tag; and

setting a sleep time period variable according to operative conditions.

28. Active tag power management method according to claim 27, ***characterized in that*** operative conditions comprise location of an active tag operated according to the power management method or kind of vehicle handling a transported unit the active tag is attached to.

29. Active tag power management method according to claim 27 or 28, ***characterized in that*** the sleep time period setting is set variable according to the sequences of sleep time periods.

30. Computer program product directly loadable into the internal memory of a processor, comprising software code portions for performing the steps of one of the claims 23 to 29, when the product is run on a processor.

# Fig. 1

# Fig. 2

12

Short range communication unit — 20

Processor/Controller — 22

Memory — 24

Power supply — 26

Interface — 28

# Fig. 3

16

30

| Short range communication unit |

32

| Long range communication unit |

34

| Satellite positioning unit |

36

| Processor/Controller |

38

| Memory |

40

| Power supply |

# Fig. 4 ( a )

# Fig. 4 ( b )

Fig.5(a)

Fig.5(b)

EP 1 246 094 A1

Fig. 6

EP 1 246 094 A1

Fig. 7

EP 1 246 094 A1

Fig. 8

EP 1 246 094 A1

# Fig. 9

```
                                                    ⟋S1
        ┌──────────────────────────────────────┐
        │    Attach mobile communication unit   │
        │       to container, e.g. a reefer     │
        │       container or a CA container      │
        └──────────────────────────────────────┘
                          │
                          ▼                      ⟋S2
        ┌──────────────────────────────────────┐
        │            Start transport            │
        └──────────────────────────────────────┘
                          │
                          ▼                      ⟋S3
        ┌──────────────────────────────────────┐
        │      Monitor state and track          │
        │        position of container          │
        └──────────────────────────────────────┘
                          │
                          ▼              ⟋S4
                     ◇ Abnormal state ◇
              Y ◄──────    ?
                                                ⟋S6
    S5                                 ┌──────────────────────┐
  ┌──────────────────────┐            │ Exchange of status and│
  │  Generate alarm and   │           │ control data & control │
  │ recover from abnormal │◄────────► │  container status      │
  │       state           │           └──────────────────────┘
  └──────────────────────┘
                          │
                          ▼              ⟋S7
              N ◄──── ◇ End of transport ◇
                              ?
                          │ Y
                          ▼                      ⟋S8
        ┌──────────────────────────────────────┐
        │   Detach mobile communication unit    │
        │           from container              │
        └──────────────────────────────────────┘
```

**European Patent Office**

**EUROPEAN SEARCH REPORT**

Application Number

EP 01 10 7441

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | US 5 565 858 A (GUTHRIE WARREN E) 15 October 1996 (1996-10-15) * abstract; figures 3A,6 * * column 3, line 65 - column 4, line 22 * * column 11, line 8 - line 42 * * column 13, line 45 - line 60 * | 1-30 | G06F17/60 G07C5/00 G06K7/00 |
| X,D | US 5 831 519 A (LOHMANN-JENSEN FLEMMING ET AL) 3 November 1998 (1998-11-03) * abstract; figures 1-3 * * column 2, line 1 - line 8 * * column 2, line 30 - line 52 * | 1-30 | |
| X | US 5 828 322 A (EBERHARD HANS JOACHIM) 27 October 1998 (1998-10-27) * abstract; figure 1 * * column 1, line 7 - column 3, line 13 * * column 6, line 34 - line 52 * | 1-30 | |
| X | US 5 448 220 A (LEVY RAYMOND H) 5 September 1995 (1995-09-05) * abstract; figure 1 * * column 3, line 5 - column 4, line 9 * | 1-30 | TECHNICAL FIELDS SEARCHED (Int.Cl.7) G06F G07C G06K |

The present search report has been drawn up for all claims

| Place of search | Date of completion of the search | Examiner |
|---|---|---|
| THE HAGUE | 20 September 2001 | Pinheiro, T |

**EP 1 246 094 A1**

**ANNEX TO THE EUROPEAN SEARCH REPORT
ON EUROPEAN PATENT APPLICATION NO.**                    EP 01 10 7441

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2001

| Patent document cited in search report | | Publication date | Patent family member(s) | | Publication date |
|---|---|---|---|---|---|
| US 5565858 | A | 15-10-1996 | GB | 2307370 A ,B | 21-05-1997 |
| | | | JP | 10506357 T | 23-06-1998 |
| | | | WO | 9608760 A1 | 21-03-1996 |
| US 5831519 | A | 03-11-1998 | AP | 668 A | 03-09-1998 |
| | | | AT | 190747 T | 15-04-2000 |
| | | | AU | 692327 B2 | 04-06-1998 |
| | | | AU | 3978195 A | 17-06-1996 |
| | | | BG | 101560 A | 30-12-1997 |
| | | | BR | 9509813 A | 03-11-1998 |
| | | | CA | 2205834 A1 | 30-05-1996 |
| | | | CN | 1170470 A | 14-01-1998 |
| | | | CZ | 9701552 A3 | 15-10-1997 |
| | | | DE | 69515688 D1 | 20-04-2000 |
| | | | DE | 69515688 T2 | 23-11-2000 |
| | | | WO | 9616387 A1 | 30-05-1996 |
| | | | DK | 793838 T3 | 31-07-2000 |
| | | | EP | 0793838 A1 | 10-09-1997 |
| | | | ES | 2143661 T3 | 16-05-2000 |
| | | | FI | 972166 A | 21-07-1997 |
| | | | GR | 3033485 T3 | 29-09-2000 |
| | | | HU | 77623 A2 | 29-06-1998 |
| | | | JP | 10509259 T | 08-09-1998 |
| | | | NO | 972308 A | 09-07-1997 |
| | | | NZ | 296069 A | 26-02-1998 |
| | | | PL | 320334 A1 | 29-09-1997 |
| | | | PT | 793838 T | 30-06-2000 |
| | | | SI | 793838 T1 | 31-08-2000 |
| | | | SK | 63497 A3 | 05-11-1997 |
| US 5828322 | A | 27-10-1998 | DE | 19516696 A1 | 07-11-1996 |
| | | | AT | 192593 T | 15-05-2000 |
| | | | DE | 59605099 D1 | 08-06-2000 |
| | | | DK | 742528 T3 | 02-10-2000 |
| | | | EP | 0742528 A2 | 13-11-1996 |
| | | | ES | 2146336 T3 | 01-08-2000 |
| | | | GR | 3033734 T3 | 31-10-2000 |
| | | | PT | 742528 T | 31-10-2000 |
| US 5448220 | A | 05-09-1995 | NONE | | |